Europäisches Patentamt

European Patent Office

Office européen des brevets

(11) Veröffentlichungsnummer: **0 132 447**
**A1**

## (12) EUROPÄISCHE PATENTANMELDUNG

(21) Anmeldenummer: 83107219.4

(22) Anmeldetag: 22.07.83

(51) Int. Cl.⁴: **F 16 H 13/00**
**F 16 H 49/00, F 16 H 19/00**

(43) Veröffentlichungstag der Anmeldung:
13.02.85 Patentblatt 85/7

(84) Benannte Vertragsstaaten:
AT BE CH DE FR GB IT LI LU NL SE

(71) Anmelder: DR.-ING. RUDOLF HELL GmbH
Grenzstrasse 1-5
D-2300 Kiel 14(DE)

(72) Erfinder: Lehmann, Manfred
Edelweisstrasse 114
D-8039 Puchheim-Bhf(DE)

(54) Getriebe hoher Übersetzung.

(57) Es handelt sich um ein spielfreies steifes Getriebe hoher Übersetzung mit auf einer gemeinsamen Achse (21) angeordneter Antriebs- (2) und Abtriebswelle (3), die an ihren einander zugewandten Enden über ein Kraftübertragungsglied (5,6,8,9) miteinander verbunden sind.

Fig. 1

0132447

Getriebe hoher Übersetzung

Die vorliegende Erfindung betrifft ein Getriebe mit auf einer gemeinsamen Achse angeordneter Antriebs- und Abtriebswelle, die an ihren einander zugewandten Enden über ein Kraftübertragungsglied miteinander verbunden sind.

Es sind bereits Getriebe mit auf einer gemeinsamen Achse angeordneter Antriebs- und Abtriebswelle, die an ihren einander zugewandten Enden über ein Kraftübertragungsglied miteinander verbunden sind, bekannt. Das Kraftübertragungsglied besteht aus einer an der Antriebswelle befestigten elastischen Scheibe, einer ortsfesten ringförmigen Stützfläche etwa gleichen Durchmessers wie die Scheibe, die im Abstand von der Scheibe auf der der Antriebswelle abgewandten Seite der Scheibe angeordnet ist, einem auf der Antriebswelle axial verschiebbaren Tragkörper für mehrere drehbar am Tragkörper gelagerte Übertragungsrollen, deren Drehachsen in radialer Richtung zu der Antriebsachse liegen und die bei Drehung der Antriebswelle auf einer gemeinsamen Kreisbahn auf der Scheibe abrollen und einer in axialer Richtung auf den Tragkörper einwirkende Feder, durch die die Antriebsrollen gegen die Scheibe und die Scheibe gegen die Stützfläche andrückbar ist.
Solche Getriebe sind z. B. in der DE-AS 16 25 135, DE-OS 21 43 662 und der DE-OS 20 36 129 beschrieben. Diese Getriebe zeichnen sich dadurch aus, daß sie hohe Übersetzungen ermöglichen und spielfrei arbeiten. Die bekannten Konstruktionen weisen aber entscheidende Fehler auf.

- 2 -

Die verwendeten Übertragungsrollen sind zylindrisch ausgebildet, ihre Achsen sind etwa parallel zum äußeren Bereich der gewölbten Scheibe. Dadurch kann die Übertragungsrolle nicht in ihrer ganzen Länge abrollen, da der radial am weitesten entfernte Umfang eine höhere Umfangsgeschwindigkeit erfordert als die näher an der Getriebemitte liegenden Bereiche. Dieser Fehler beim Abrollen führt dazu, daß die Übertragungsrolle teilweise gleiten muß, was zu hohem Verschleiß und Rattermarken, lautem Geräusch und deutlich vermindertem Abtriebsmoment führt.

Der Erfindung liegt daher die Aufgabe zugrunde, ein verbessertes spielfreies Getriebe mit hoher Steifigkeit bei hoher Übersetzung anzugeben, das diese Nachteile nicht aufweist.

Die Erfindung erreicht dies durch die im kennzeichnenden Teil des Anspruchs 1 angegebenen Merkmale.

Vorteilhafte Weiterbildungen der Erfindung sind in den Unteransprüchen 2 - 3 angegeben.

Die Erfindung wird im folgenden anhand der Figuren 1 - 3 näher erläutert.

Es zeigen:

Fig. 1 ein Querschnitt durch ein Getriebe gemäß der Erfindung,

Fig. 2 eine Schnittzeichnung einer vorteilhaften Ausgestaltung der elastischen Scheibe und

Fig. 3 eine Schnittzeichnung einer weiteren Ausgestaltung der Erfindung.

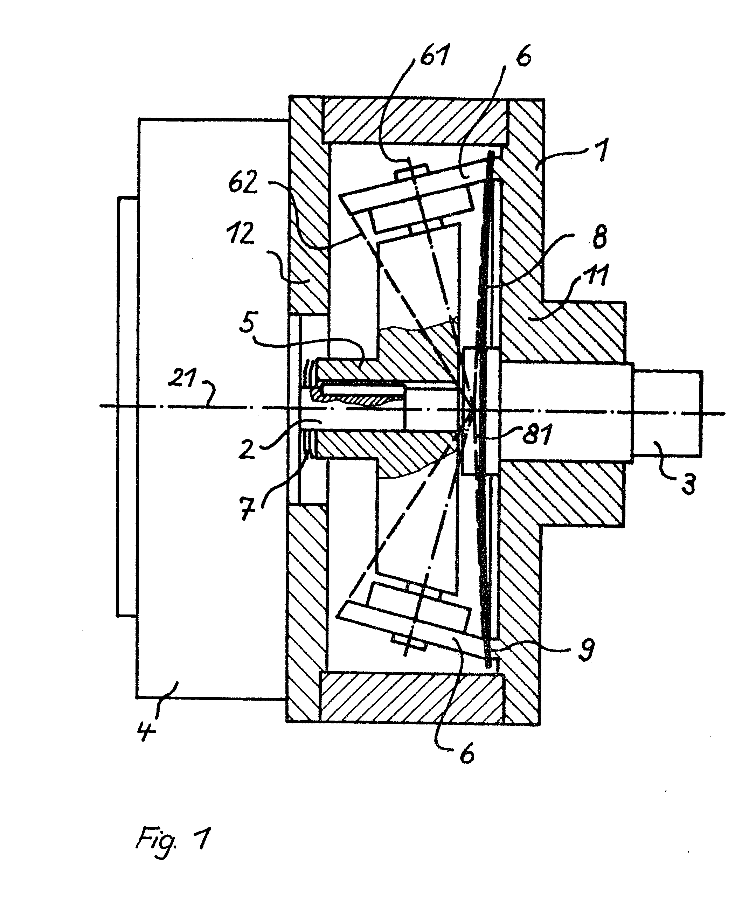

Fig. 1 zeigt ein Getriebe im Querschnitt, das aus einem Gehäuse (1) besteht, das sich aus zwei Deckeln (11) und (12) sowie einem Mittelteil 13, das die beiden Deckel miteinander verbindet, besteht. Durch die Deckel (11) und (12) ragen die Antriebswelle (2) und die Abtriebswelle (3) in das Gehäuseinnere.

Die Antriebswelle (2), z. B. die Welle eines Antriebsmotors (4) trägt eine gegen Verdrehung gesicherte, aber axial verschiebbare Hülse (5), an der zwei Übertragungsrollen (6) gelagert sind.

Diese Hülse mit den Übertragungsrollen wird durch die Federn (7) gegen eine elastische Scheibe (8) gedrückt, die fest mit der Abtriebswelle (3) verbunden ist.

Diese Scheibe ist im umbelasteten Zustand eben und steht ein kleines Stück vor dem Gehäuse (1), an dem eine ringförmige Abstützfläche (9) vorgesehen ist. Durch die Übertragungsrollen wird die Scheibe verformt und gegen das Gehäuse gepreßt. Zwischen den Rollen (6) bleibt die Scheibe wellenförmig von der Stützfläche (9) des Gehäuses abgehoben.

- 4 -

Bei Drehung des Antriebes (2) rollen die Übertragungsrollen (6) über die elastische Scheibe (8) und drücken dabei den Umfang der Scheibe so gegen den Abstützring (9), daß der gewellte Umfang der Scheibe (8) vor den Übertragungsrollen (6) weitergeschoben wird.

Der Umfang der Scheibe (8) rollt dabei auf dem Abstützring (9) ab. Da der gewellte Umfang der Scheibe (8) länger ist als der Umfang des Abstützringes (9) am Gehäusedeckel (11), eilt die elastische Scheibe (8) pro Antriebsumdrehung um die Differenz der Umfänge vor. Je kleiner diese Differenz ist, d. h. je flacher die wellenförmige Durchwölbung der elastischen Scheibe (8) ist, um so weniger eilt die Scheibe voraus. Die Abtriebsbewegung wird immer geringer, d. h. es wird eine sehr hohe Übersetzung erreicht. In der Größenordnung der skizzierten Durchwölbung lassen sich damit in einer Stufe Übersetzungen in Größenordnungen von 100fach bis mehrere 1000fach einfach erzeugen. Das Drehmoment an der Abtriebswelle (3) wird über die Scheibe (8) auf dem denkbar kürzesten Weg direkt ins Gehäuse geleitet: die Scheibe hat die Wirkung einer Kupplung, die im Bereich der Übertragungsrollen (6) unmittelbar kraftschlüssig mit dem Gehäuse (1) verbunden ist. Die Scheibe (8) stellt dabei eine sehr drehfeste Kupplung-Membran dar, d. h. das Drehmoment wird ohne merkliche Drehelastizitäten abgestützt. In axialer Richtung kann die Scheibe (8) dagegen sehr leicht verformt werden so daß sie den Übertragungsrollen (6) fast keinen Widerstand entgegensetzt.

- 5 -

Der Abtrieb (3) des Getriebes kann spielfrei im Gehäusedeckel (11) gelagert werden, geringes Spiel an der Antriebswelle (2) hat wegen der hohen Übersetzung keinen Einfluß auf den Abtrieb.

Bei dieser vorgeschlagenen Ausführung des erfindungsgemäßen Getriebes sind die Übertragungsrollen (6) kegelig ausgebildet. Dabei ist die wesentliche Bedienung, daß die Endtangente (81) der gewölbten Scheibe (Biegelinie im radialen Schnitt zwischen den Berührungspunkten) ermittelt wird. Die Kegelrolle (6) soll dann so ausgebildet werden, daß ihre Achse (61) und die Kegelmantellinien (62) durch den Schnittpunkt der Endtangente (81) mit der Achse (21) der Antriebswelle (2) verlaufen.

Dadurch ist gewährleistet, daß die Rollbedingung eingehalten wird.

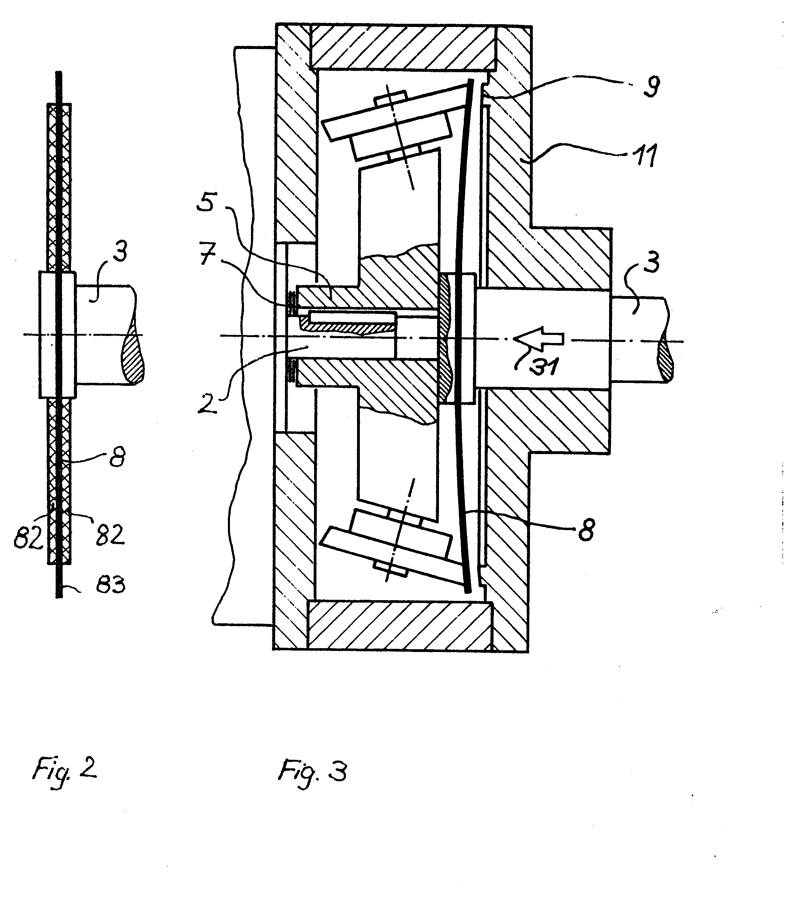

Fig. 2 zeigt eine weitere Ausgestaltung der Erfindung. Die Scheibe (8) kann dabei auf einer oder beiden Seiten mit einem geräuschdämmenden Material beschichtet werden, um die "Membran" am Schwingen zu hindern. Der Rand (83) der Scheibe (8), an dem die Kraftübertragung stattfindet, wird frei von der Beschichtung gehalten.

Fig. 3 zeigt eine weitere Ausgestaltung der Erfindung mit einem Schnellgang. Bei der Anwendung derartiger Getriebe wird häufig gewünscht, neben der hohen Übersetzung im Feingang, auch einen Grob- oder Eilgang schalten zu können.

- 6 -

Beim vorgeschlagenen Getriebe kann eine Umschaltung sehr leicht erfolgen, wenn die Abtriebswelle (3) axial in Pfeilrichtung (31) soweit verschoben wird, daß sie an der Antriebshülse (5) anstößt, die Hülse (5) gegen die Wirkung der Feder (7) zurückschiebt und dabei die elastische Scheibe (8) von dem Andrückring (9) des Gehäusedeckels (11) gelöst wird. Dadurch kann die Abtriebswelle (3) kraft- oder formschlüssig mit der Antriebswelle (2) verbunden werden. Die Getriebeübersetzung ist ausgeschaltet.

- 7 -

## Patentansprüche

1. Getriebe mit koaxialer Antriebs- und Abtriebswelle, die an ihren einander zugewandten Enden über ein Kraftübertragungsglied miteinander verbunden sind, das aus einer an der Abtriebswelle befestigten elastischen Scheibe, einer ringförmigen Stützfläche etwa gleichen Durchmessers wie die Scheibe, die im Abstand von der Scheibe auf der der Antriebswelle abgewandten Seite der Scheibe unverdrehbar angeordnet ist, einem von der Antriebswelle verdrehbaren Tragkörper für mehrere drehbare am Tragkörper gelagerte Übertragungsrollen, deren Drehachse radial zur Antriebsachse liegt und die bei Drehung der Antriebswelle auf einer gemeinsamen Kreisbahn auf der Scheibe abrollen und einer in axialer Richtung wirkenden Feder, durch die Antriebsrollen, Scheibe und Stützfläche, gegeneinander andrückbar sind, besteht, dadurch gekennzeichnet, daß die Übertragungsrollen kegelig ausgebildet sind und daß die Antriebsachse, die Drehachse der Übertragungsrollen, die Mantellinien der Übertragungsrollen und die Endtangente der an den äußeren Rand der Stützfläche gedrückten Scheibe sich in einem Punkt schneiden.

2. Getriebe nach Anspruch 1, dadurch gekennzeichnet, daß die elastische Scheibe auf einer Seite oder auf beiden Seiten mit einer elastischen und/oder schalldämmenden Schicht beschichtet ist, wobei der überrollte Rand freibleibt.

- 8 -

3. Getriebe nach einem oder mehreren der Ansprüche 1 und 2, <u>dadurch gekennzeichnet</u>, daß die Abtriebswelle in axialer Richtung so weit verschiebbar ist, daß sie an die Antriebswelle kraft- oder formschlüssig ankuppelbar ist und die elastische Scheibe dabei vom Gehäuse abhebt, so daß die Bewegungsübertragung ohne Getriebewirkung direkt vom Antrieb auf den Abtrieb durchgeschaltet ist.

Fig. 1

Fig. 2

Fig. 3

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. 3) |
|---|---|---|---|
| X | US-A-3 178 963 (MUSSER) <br> * Spalten 3-5; Figuren * | 1,2 | F 16 H 13/00 <br> F 16 H 49/00 <br> F 16 H 15/00 |
| X | FR-A-1 552 512 (VICH) <br> * Seite 3; Figur 2 * | 1 | |
| A,D | DE-B-1 625 135 (ROLLER GEAR) | 1 | |
| A,D | DE-A-2 143 662 (KLEINWÄCHTER) | 1 | |
| A,D | DE-A-2 036 129 (USM) | 1 | |

**RECHERCHIERTE SACHGEBIETE (Int. Cl. 3)**

F 16 H 13/00
F 16 H 15/00
F 16 H 49/00

Der vorliegende Recherchenbericht wurde für alle Patentansprüche erstellt.

| Recherchenort <br> DEN HAAG | Abschlußdatum der Recherche <br> 08-03-1984 | Prüfer <br> FLORES E. |
|---|---|---|